# EUROPEAN PATENT APPLICATION

(11) **EP 4 160 942 A1**
(43) Date of publication of application: **05.04.2023**
(21) Application number: 21832941.5
(22) Date of filing: 04.06.2021
(51) Int. Cl.: H04B 10/079, H04Q 11/00

(54) **OPTICAL LINE TERMINAL (OLT) DEVICE AND OPTICAL PATH PROCESSING METHOD**

(30) Priority: 30.06.2020 CN 202010612724
(71) Applicant: Huawei Technologies Co., Ltd., Longgang District, Shenzhen, Guangdong 518129 (CN)
(72) Inventor: LIN, Liankui, Shenzhen, Guangdong 518129 (CN)
(74) Representative: Gill Jennings & Every LLP
(86) International application number: PCT/CN2021/098471
(87) International publication number: WO 2022/001584

(57) **Abstract**

This application provides an optical line terminal OLT device and an optical path processing method. The OLT device includes a first downlink interface, an optical-to-electrical conversion unit, and an optical path processing module. The optical-to-electrical conversion unit includes a first optical port and a second optical port. The first downlink interface is separately connected to the first optical port and the second optical port by using the optical path processing module. The optical path processing module is configured to enable a first optical path between the first downlink interface and the first optical port or enable a second optical path between the first downlink interface and the second optical port. An available optical path of optical paths between a downlink interface of the OLT device provided in this application and at least two optical ports of the optical-to-electrical conversion unit is established, to avoid service impact caused by a fault of the downlink interface on user equipment, thereby improving reliability and applicability of the OLT device.

## Description

This application claims priority to Chinese Patent Application No. 202010612724.7, filed with the China National Intellectual Property Administration on June 30, 2020 and entitled "OPTICAL LINE TERMINAL OLT DEVICE AND OPTICAL PATH PROCESSING METHOD", which is incorporated herein by reference in its entirety.

### TECHNICAL FIELD

This application relates to the communication field, and in particular, to an optical line terminal (optical line terminal, OLT) device and an optical path processing method.

### BACKGROUND

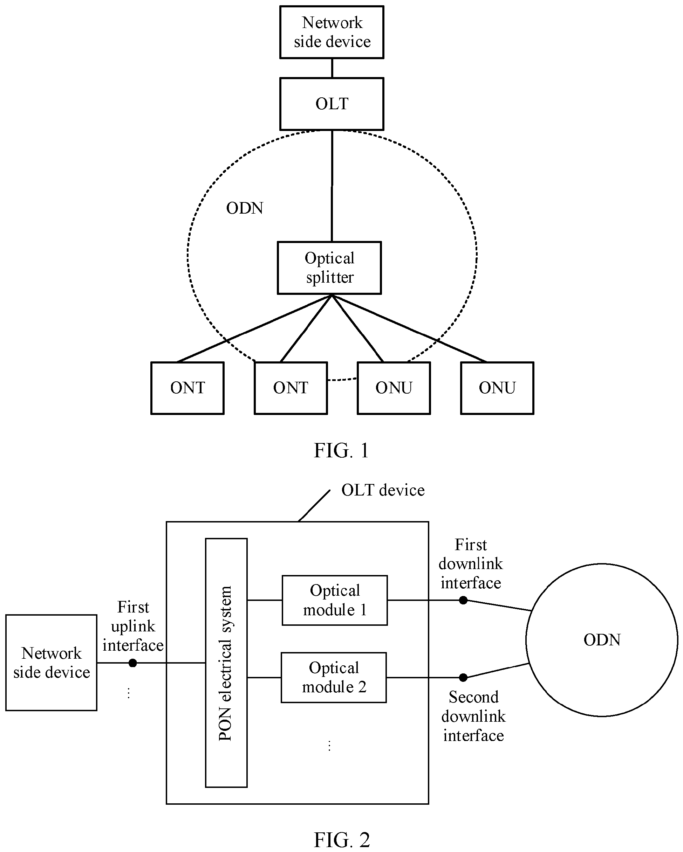

With continuous development of communication technologies, optical communication technologies are increasingly widely used. In addition, in an optical communication network established based on an optical communication technology, a conventional network access system is also gradually replaced with an optical access network (optical access network, OAN) system. A passive optical network (passive optical network, PON) is an implementation technology of an optical access network, and the PON is an optical access technology for point-to-multipoint transmission. FIG. 1 is a schematic diagram of an architecture of a PON system according to an embodiment of this application. As shown in FIG. 1, an optical line terminal (optical line terminal, OLT) is configured to provide a network side interface for an OAN. The OLT is connected to a network side device (for example, a switch or a router) on an upper layer, and one or more optical distribution networks (optical distribution network, ODN) on a lower layer. The ODN includes a passive optical splitter for optical power allocation, a feeder fiber connected between the passive optical splitter and the OLT, and a distribution fiber connected between the passive optical splitter and an optical network unit (optical network unit, ONU). When downlink data is transmitted, the ODN transmits downlink data of the OLT to each ONU by using an optical splitter. Similarly, when uplink data is transmitted, each ODN aggregates the uplink data and then transmits the uplink data to the OLT.

It should be noted that the ONU provides a user side interface for the OAN and is connected to the ODN. If the ONU provides a user port function at the same time, for example, the ONU provides an Ethernet user port or a plain old telephone service (plain old telephone service, POTS) user port, the ONU may also be referred to as an optical network termination (optical network termination, ONT).

In an OAN system, an OLT device may be configured to convert an optical signal under an Ethernet protocol received from the network side device into an electrical signal under a passive optical network (passive optical network, PON) protocol, convert the electrical signal into an optical signal under the PON network protocol by using an optical module included in the OLT device, and transmit the optical signal to the ODN through a downlink interface of the OLT device. As the optical access system is gradually popularized, reliability and practicality of the OLT device are increasingly concerned.

In the conventional technology, the downlink interface of the OLT device and the optical module inside the OLT device are used in a one-to-one correspondence, and a fault rate of an optical component in the OLT device is usually high. Therefore, when a downlink interface is faulty for an optical module or another optical component that is currently used by the downlink interface is damaged, a service of user equipment served by the downlink interface is affected, for example, the service has a high delay or is interrupted. A current solution to this problem is to replace the faulty downlink interface with a new downlink interface to complete the corresponding service. However, replacement of the downlink interface needs to transfer all user equipments on the faulty downlink interface to the new downlink interface. In this way, the service of the user equipment still has a large delay due to the replacement of the interface. Therefore, reliability and applicability of an existing OLT device are poor.

### SUMMARY

To resolve the foregoing problem, this application provides an optical line terminal OLT device, to improve reliability and applicability.

According to a first aspect, this application provides an OLT device. The OLT device includes a first downlink interface, an optical-to-electrical conversion unit, and an optical path processing module. The optical-to-electrical conversion unit includes a first optical port and a second optical port, the first downlink interface is separately connected to the first optical port and the second optical port by using the optical path processing module, and the optical path processing module is configured to enable a first optical path between the first downlink interface and the first optical port or enable a second optical path between the first downlink interface and the second optical port.

The OLT device provided in this application establishes, by using the optical path processing module, two optical paths that can be enabled at any time between the first downlink interface and the optical-to-electrical conversion unit. In this way, in a case in which an optical path currently used by the first downlink interface is faulty, the OLT device may enable the other optical path to replace the faulty optical path, so that a fault of the first downlink interface can be quickly recovered, thereby ensuring that transmission of an optical signal between the first downlink interface and the optical-to-electrical conversion unit is not interrupted. In this way, a service of user equipment served by the first downlink interface is not affected by a fault of the first downlink interface, thereby improving reliability and applicability of the OLT device.

With reference to the first aspect, in a feasible implementation, the optical path processing module includes a first switching unit. The first switching unit is included in the first optical path and the second optical path, a first port of the first switching unit is connected to the first optical port, a second port of the first switching unit is connected to the second optical port, and a third port of the first switching unit is connected to the first downlink interface. The first switching unit is configured to establish a connection between the first optical port and the third port of the first switching unit, or establish a connection between the second optical port and the third port of the first switching unit. Herein, the OLT device uses a first switching unit as an optical path processing module to implement enabling of the first optical path or the second optical path, and a structure is simple and stable, so that fast enabling of the first optical path or the second optical path can be implemented, thereby improving troubleshooting efficiency of the downlink interface.

With reference to the first aspect, in a feasible implementation, the OLT device further includes a test downlink interface, and the optical path processing module includes a second switching unit. The second switching unit is included in the first optical path and the second optical path, a first port of the second switching unit is connected to the third port of the first switching unit, a second port of the second switching unit is connected to the first downlink interface, and a third port of the second switching unit is connected to a side of the test downlink interface. The second switching unit is configured to establish a connection between the third port of the first switching unit and the first downlink interface or the test downlink interface. Herein, by using the second switching unit, the OLT device can perform fault detection on the first optical path and the second optical path through the test downlink interface.

With reference to the first aspect, in a feasible implementation, the OLT device further includes a control module and a test feedback interface, and the optical-to-electrical conversion unit further includes a third optical port. The control module is separately connected to the optical-to-electrical conversion unit and the optical path processing module, the other side of the test downlink interface is connected to one side of the test feedback interface, and the other side of the test feedback interface is connected to the third optical port. When the control module determines to perform fault detection on the first optical path, the control module is configured to generate and send first control information to the optical path processing module, the second switching unit is configured to establish a connection between the third port of the first switching unit and one side of the test downlink interface based on the first control information, the control module is further configured to generate and send a first test electrical signal to the optical-to-electrical conversion unit, the optical-to-electrical conversion unit is configured to convert the first test electrical signal into a first test optical signal and send the first test optical signal to the second switching unit through the first optical port, and the second switching unit is further configured to send the first test optical signal to the test feedback interface through the test downlink interface. The optical-to-electrical conversion unit is further configured to receive the test electrical signal from the test feedback interface through the third optical port, and convert the first test electrical signal into a second test optical signal and send the second test optical signal to the control module, and the control module is configured to determine, based on the second test electrical signal, whether the first optical path is faulty. Herein, the OLT device may actively perform fault detection on different optical paths (for example, the first optical path or the second optical path) of the first downlink interface by using an optical signal feedback structure formed by the optical path processing module, the test downlink interface, and the test feedback interface, to implement fault troubleshooting and fast recovery of the first downlink interface, and improve reliability and applicability of the OLT device.

With reference to the first aspect, in a feasible implementation, the OLT device further includes a second downlink interface, the optical-to-electrical conversion unit further includes a fourth optical port, and the optical path processing module further includes a third switching unit and a fourth switching unit. The third switching unit is included in the second optical path and a third optical path between the fourth optical port and the second downlink interface, the fourth switching unit is included in the third optical path, a first port of the third switching unit is connected to the second optical port, a second port of the third switching unit is connected to the second port of the first switching unit, a third port of the third switching unit is connected to a first port of the fourth switching unit, a second port of the fourth switching unit is connected to the fourth optical port, and a third port of the fourth switching unit is connected to the second downlink interface. The third switching unit is configured to establish a connection between the second port of the second switching unit or the first port of the fourth switching unit and the second optical port, and the fourth switching unit is configured to establish a connection between the first port of the third switching unit or the fourth optical port and the third port of the fourth switching unit.

With reference to the first aspect, in a feasible implementation, the optical path processing module further includes a fifth switching unit. The fifth switching unit is included in the third optical path, a first port of the fifth switching unit is connected to the third port of the fourth switching unit, a second port of the fifth switching unit is connected to the first downlink interface, and a third port of the fifth switching unit is connected to the second downlink interface. The fifth switching unit is configured to establish a connection between the third port of the fourth switching unit and the first downlink interface or the second downlink interface. Herein, the OLT device further enriches an available optical path between the first downlink interface 40 and the optical port of the optical-to-electrical conversion unit based on the fifth switching unit 305, thereby further improving optical path allocation flexibility of the OLT device.

With reference to the first aspect, in a feasible implementation, the control module is configured to: when it is determined that a preset trigger condition is met, generate and send second control information to the optical path processing module, where the optical path processing module is configured to enable the second optical path based on the second control information. Herein, the preset trigger condition includes that the first optical path is faulty, or preset optical path processing trigger information is received.

With reference to the first aspect, in a feasible implementation, the first downlink interface and/or the second downlink interface access the ODN through a multiple-fiber push-on/pull off MPO optical interface. Herein, the downlink interface accesses the ODN through the MPO optical interface, to avoid processes such as fiber splicing in an ODN access process, thereby improving installation and maintenance efficiency of the OLT device and reducing installation and maintenance costs.

With reference to the first aspect, in a feasible implementation, the optical-to-electrical conversion unit includes at least one optical module, and any one of the at least one optical module corresponds to at least one optical port of the optical-to-electrical conversion unit. Herein, based on an implementation form in which a plurality of optical modules that are independent of each other integrate an optical-to-electrical conversion unit and one optical module is used to provide one or more optical ports or electrical ports for the optical-to-electrical conversion unit, diversity of connection between the optical port and the electrical port of the optical-to-electrical conversion unit can be improved, and flexibility of allocation between the optical port and the electrical port of the optical-to-electrical conversion unit can be improved.

With reference to the first aspect, in a feasible implementation, the control module is configured to: when a service request for the first downlink interface is received, determine the first optical port from the plurality of optical ports of the optical-to-electrical conversion unit based on a preset optical port screening rule, and control the optical path processing module to enable the first optical path.

With reference to the first aspect, in a feasible implementation, the control module is further configured to receive unit status information sent by the optical-to-electrical conversion unit, and determine, based on the unit status information, whether the first optical path is faulty. The control module is further configured to receive an optical path status report sent by user equipment connected to the first downlink interface, and determine, based on the optical path status report, whether the first optical path is faulty.

With reference to the first aspect, in a feasible implementation, when the first optical port meets a preset service rule, the third switching unit is configured to establish a connection between the second port of the first switching unit and the second optical port; or when the third optical port meets the preset service rule, the third switching unit is configured to establish a connection between the first port of the fourth switching unit and the second optical port.

According to a second aspect, this application provides an optical path processing method. The method is applicable to an OLT device. The OLT device includes a first downlink interface, an optical-to-electrical conversion unit, an optical path processing module, and a control module. The optical-to-electrical conversion unit includes a first optical port and a second optical port. The first downlink interface is separately connected to the first optical port and the second optical port by using the optical path processing module. The control module generates and sends control information to the optical path processing module. The control module controls, by using the control information, the optical path processing module to enable a first optical path between the first downlink interface and the first optical port, or enable a second optical path between the first downlink interface and the second optical port.

With reference to the second aspect, in a feasible implementation, the control information includes second control information and third control information, and the optical path processing module includes a first switching unit. The first switching unit is included in the first optical path and the second optical path, a first port of the first switching unit is connected to the first optical port, and a second port of the first switching unit is connected to the second optical port. A third port of the first switching unit is connected to the first downlink interface. The control module controls, by using the second control information, the optical path processing module to establish a connection between the second optical port and the third port of the first switching unit, or the control module controls, by using the third control information, the optical path processing module to establish a connection between the first optical port and the third port of the first switching unit.

With reference to the second aspect, in a feasible implementation, the OLT device further includes a test downlink interface, and the optical path processing module includes a second switching unit. The second switching unit is included in the first optical path and the second optical path, a first port of the second switching unit is connected to the third port of the first switching unit, and a second port of the second switching unit is connected to the first downlink interface. A third port of the second switching unit is connected to a side of the test downlink interface. The control module sends first control information to the optical path processing module. The control module controls, by using the first control information, the optical path processing module to establish a connection between the third port of the first switching unit and the side of the test downlink interface.

With reference to the second aspect, in a feasible implementation, the OLT device further includes a control module and a test feedback interface, and the optical-to-electrical conversion unit 20 further includes a third optical port. The control module is separately connected to the optical-to-electrical conversion unit and the optical path processing module, the other side of the test downlink interface is connected to one side of the test feedback interface, and the other side of the test feedback interface is connected to the third optical port. The control module sends a first test electrical signal to the optical-to-electrical conversion unit. The control module converts the first test electrical signal into a first test optical signal by using the optical-to-electrical conversion unit, and transmits the first test optical signal to the optical path processing module. The control module sends, by using the optical path processing module, the first test optical signal to the test feedback interface through the test downlink interface. The control module converts the first test optical signal received from the test feedback interface into a second test electrical signal by using the optical-to-electrical conversion unit. The control module determines, based on the second test electrical signal, whether the first optical path is faulty.

With reference to the second aspect, in a feasible implementation, the OLT device further includes a second downlink interface, the optical-to-electrical conversion unit further includes a fourth optical port, and the optical path processing module further includes a third switching unit and a fourth switching unit. The third switching unit is included in the second optical path and a third optical path between the fourth optical port and the second downlink interface. The fourth switching unit is included in the third optical path. A first port of the third switching unit is connected to the second optical port. A second port of the third switching unit is connected to the second port of the first switching unit, and a third port of the third switching unit is connected to a first port of the fourth switching unit. A second port of the fourth switching unit is connected to the fourth optical port. A third port of the fourth switching unit is connected to the second downlink interface. The control module sends fourth control information to the optical path processing module. The control module controls, by using the fourth control information, the optical path processing module to establish a connection between the first port of the fourth switching unit and the second optical port, and establish a connection between the first port of the third switching unit and the third port of the fourth switching unit.

With reference to the second aspect, in a feasible implementation, the control module may receive unit status information sent by the optical-to-electrical conversion unit, and determine, based on the unit status information, whether the first optical path is faulty. The control module is further configured to receive an optical path status report sent by user equipment connected to the first downlink interface, and determine, based on the optical path status report, whether the first optical path is faulty.

With reference to the second aspect, in a feasible implementation, when determining that the first optical port meets a preset service rule, the control module may control the third switching unit to establish a connection between the second port of the first switching unit and the second optical port. When determining that the third optical port meets the preset service rule, the control module may control the third switching unit to establish a connection between the first port of the fourth switching unit and the second optical port.

With reference to the second aspect, in a feasible implementation, the control module may determine, when receiving a service request for the first downlink interface, the first optical port from a plurality of optical ports of the optical-to-electrical conversion unit based on a preset optical port screening rule, and control the optical path processing module to enable the first optical path.

With reference to the second aspect, in a feasible implementation, the first downlink interface and/or the second downlink interface access a PON through a multiple-fiber push-on/pull off MPO optical interface.

In the optical path processing method provided in this application, the control module may control the optical path processing module to enable at least two optical paths between the downlink interface and the optical-to-electrical conversion unit. In this way, in a case in which an optical path currently used by the downlink interface is faulty, a control apparatus may enable another optical path to replace the faulty optical path, so that a fault of the downlink interface can be quickly recovered, thereby ensuring that transmission of an optical signal between the downlink interface and the optical-to-electrical conversion unit is not interrupted, avoiding that a service of user equipment served by the downlink interface is not affected by the fault of the downlink interface, and improving reliability and applicability of the OLT device.

### BRIEF DESCRIPTION OF DRAWINGS

FIG. 1 is a schematic diagram of an architecture of a PON system according to an embodiment of this application;
FIG. 2 is a schematic diagram of a structure of an existing OLT device;
FIG. 3 is a schematic diagram of a structure of an OLT device according to an embodiment of this application;
FIG. 4 is another schematic diagram of a structure of an OLT device according to an embodiment of this application;
FIG. 5 is a schematic diagram of a structure of an optical-to-electrical conversion unit according to an embodiment of this application;
FIG. 6 is still another schematic diagram of a structure of an OLT device according to an embodiment of this application;
FIG. 7 is still another schematic diagram of a structure of an OLT device according to an embodiment of this application;
FIG. 8 is still another schematic diagram of a structure of an OLT device according to an embodiment of this application;
FIG. 9 is still another schematic diagram of a structure of an OLT device according to an embodiment of this application;
FIG. 10 is still another schematic diagram of a structure of an OLT device according to an embodiment of this application;
FIG. 11 is a schematic diagram of an application of an OLT device according to this application; and
FIG. 12 is a schematic flowchart of an optical path processing method according to an embodiment of this application.

### DESCRIPTION OF EMBODIMENTS

The following describes technical solutions of this application with reference to the accompanying drawings.

As shown in FIG. 1, as an access network device, an OLT device is mainly configured to process and forward an optical signal between a network side device and an ODN. Take a downlink communication scenario as an example, the OLT device may first receive an optical signal under an Ethernet protocol from the network side device through an uplink interface. Herein, the uplink interface is an interface between the OLT device and the network side device, and is configured to send or receive data between the OLT device and the network side device. Then, the OLT device may convert the optical signal under the Ethernet protocol into an optical signal under a PON network protocol, and then send the optical signal under the PON network protocol to the ODN through a downlink interface. Herein, the downlink interface is an optical interface between the OLT device and the ODN, and is configured to send or receive an optical signal between the OLT device and the ODN. Then, the ODN distributes the optical signal under the PON network protocol to one or more ONTs or ONUs served by the ODN. In actual application, the network side device may specifically include a switch, a router, and the like. In this embodiment of this application, the ONT or the ONU is collectively referred to as user equipment.

FIG. 2 is a schematic diagram of a structure of an existing OLT device. As shown in FIG. 2, the existing OLT device includes one or more uplink interfaces (a first uplink interface shown in the figure) that are configured to connect to a network side device, and further includes a plurality of downlink interfaces (a first downlink interface and a second downlink interface shown in the figure) that are connected to an ODN. The OLT device may include a PON electrical system and a plurality of optical modules (also referred to as optical components) that are independent of each other, such as an optical module 1 and an optical module 2. Herein, an electrical port of each optical module is electrically connected to the PON electrical system, and an optical port of each optical module is electrically connected to the downlink interfaces of the OLT device in a one-to-one correspondence manner. For example, an electrical port of the optical module 1 establishes an electrical connection to the PON electrical system, and an optical port of the optical module 1 establishes an optical connection to only the first downlink interface. In actual application, the PON electrical system may specifically include an Ethernet uplink module, a line status word (line status word, LSW)/switch and forward module, a PON optical component, and the like, and may be used to perform operations such as optical-to-electrical conversion and signal analysis on an optical signal under an Ethernet protocol that is received from the network side device. Each optical module is mainly configured to implement mutual conversion between an optical signal and an electrical signal under a PON network protocol. Specifically, the optical module may convert an optical signal received by the optical port into an electrical signal and output the electrical signal from the electrical port, and may convert an electrical signal received by the electrical port into an optical signal and output the electrical port from the optical port. For example, during downlink data transmission, the PON electrical system may be used to convert an optical signal under an Ethernet protocol received by the OLT device through the downlink interface into an electrical signal under the PON network protocol, and then the PON electrical system may further analyze the electrical signal obtained through conversion to obtain an address of user equipment corresponding to the electrical signal, to determine a downlink interface for outputting the electrical signal. Herein, it is assumed that the downlink interface is the first downlink interface. Then, the PON electrical system may send the electrical signal under the PON network protocol obtained through conversion to the electrical port of the optical module 1. The optical module 1 may convert the electrical signal under the PON network protocol into an optical signal under the PON network protocol, and send the optical signal to the first downlink interface through the optical port.

In the existing OLT device, a downlink interface and an optical port of an independent optical module are connected in a one-to-one correspondence, that is, an optical signal output from an optical port of an optical module is output to the ODN through a downlink interface corresponding to the optical port of the optical module. However, a damage rate of an optical component (for example, an optical module) is high. In actual application, a downlink interface is usually faulty due to a damage to an optical component currently used, and further, user equipment served by the downlink interface is affected, for example, a high service delay or service interruption occurs. A current solution to this problem is to replace the faulty downlink interface with a new downlink interface. However, replacement of the downlink interface needs to transfer all services on the faulty downlink interface to the new downlink interface. In this way, the user equipment served by the faulty downlink interface still cannot normally perform service data transmission within a period of time, resulting in a large service delay of the user equipment and poor reliability of the existing OLT device.

Therefore, a technical problem that needs to be resolved in this application is how to improve reliability and practicality of an OLT device.

### Embodiment 1

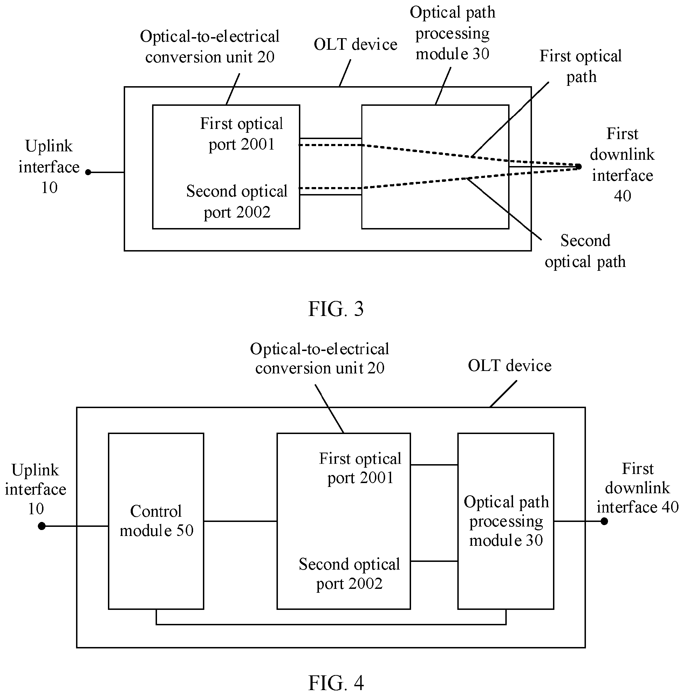

FIG. 3 is a schematic diagram of a structure of an OLT device according to an embodiment of this application. Operating principles of the OLT device in an uplink communication scenario and a downlink communication scenario are similar, except that a processing sequence is an inverse process. Therefore, in this embodiment of this application, the downlink communication scenario is used as an example to describe in detail a structure and an operating principle of the OLT device provided in this application.

As shown in FIG. 3, the OLT device may include an uplink interface 10, an optical-to-electrical conversion unit 20, an optical path processing module 30, and a first downlink interface 40. A function of the uplink interface 10 is the same as a function of an uplink interface of an existing OLT device described in the foregoing. Details are not described herein again. A function of the optical-to-electrical conversion unit 20 is similar to that of the foregoing optical module, and the optical-to-electrical conversion unit 20 is mainly configured to switch between an optical signal and an electrical signal under a PON network protocol. The optical path processing module 30 is mainly configured to enable different optical paths between an optical port of the optical-to-electrical conversion unit 20 and a downlink interface of the OLT device. A function of the first downlink interface 40 is the same as a function of the foregoing downlink interface of the existing OLT device.

In a specific implementation, the optical-to-electrical conversion unit 20 includes a first optical port 2001 and a second optical port 2002. The first optical port 2001 and the second optical port 2002 are separately connected to the optical path processing module 30. One port of the optical path processing module 30 is connected to the first downlink interface 40, or is directly used as the first downlink interface 40. The OLT device arranges a first optical path between the first optical port 2001 and the first downlink interface 40 by using the optical path processing module 30. In addition, the OLT device further arranges a second optical path between the second optical port 2002 and the first downlink interface 40 by using the optical path processing module 30. It should be noted herein that the first optical path or the second optical path arranged by the optical path processing module 30 is conducted (signal transmission can be performed) only after being enabled, and is not conducted before being enabled.

In a downlink communication scenario, the optical-to-electrical conversion unit 20 is configured to convert a first electrical signal received and converted by the OLT device through the downlink interface 10 into a first optical signal, and output the first optical signal through the first optical port 2001 or the second optical port 2002 on the optical-to-electrical conversion unit 20. The optical path processing module 30 is configured to enable the first optical path or the second optical path based on a requirement. For example, if the first downlink interface 40 currently transmits a signal by using the first optical path, when the first optical path is faulty, the optical path processing module 30 may enable the second optical path to replace the first optical path. Alternatively, if the first downlink interface 40 currently transmits a signal by using the second optical path, when the second optical path is faulty, the optical path processing module 30 may enable the first optical path to replace the second optical path. Then, the OLT device may transmit, by using the first optical path or the second optical path, a second optical signal output by the first optical port 2001 or the second optical port 2002 to the first downlink interface 40.

It should be noted herein that the first optical path or the second optical path is faulty refers to that transmission of an optical signal between the first optical port 2001 or the second optical port 2002 and the first downlink interface 40 is interrupted. A cause of the interruption may be specifically that an optical component in the first optical path or the second optical path is faulty (for example, the first optical port 2001 or the second optical port 2002 is faulty), or a connection fiber in the first optical path or the second optical path is faulty. This is not specifically limited herein. In this embodiment of this application, if an optical path currently used by a downlink interface is faulty, it may be considered that the downlink interface is faulty. If another optical path is enabled to replace the faulty optical path, it may be considered that a fault of the downlink interface is resolved. For example, assuming that an optical path currently used by the first downlink interface 40 is the first optical path, when the first optical path is faulty, it may be considered that the first downlink interface 40 is faulty. After the optical path processing module 30 enables the second optical path to replace the first optical path, it may be considered that a fault of the first downlink interface 40 is resolved. It should be further explained herein that, in this embodiment of this application, at any moment, only one optical path between a downlink interface and an optical port is conducted.

Herein, the OLT device establishes, by using the optical path processing module 30, two optical paths that can be enabled at any time between the first downlink interface 40 and the optical-to-electrical conversion unit 20. In this way, in a case in which an optical path currently used by the first downlink interface 40 is faulty, the OLT device may enable the other optical path to replace the faulty optical path, so that a fault of the first downlink interface 40 can be quickly recovered, thereby ensuring that transmission of an optical signal between the first downlink interface 40 and the optical-to-electrical conversion unit 20 is not interrupted. In this way, a service of user equipment served by the first downlink interface 40 is not affected by a fault of the first downlink interface 40, thereby improving reliability and applicability of the OLT device. In addition, in this way, the OLT device does not need to perform frequent on-site maintenance, and only needs to perform maintenance when a preset maintenance period arrives. Free maintenance of the OLT device can be implemented even in a case in which cyclic utilization is not considered, thereby greatly reducing operation and maintenance costs of the OLT device.

Further, FIG. 4 is another schematic diagram of a structure of an OLT device according to an embodiment of this application. As shown in FIG. 4, the OLT device may further include a control module 50. The control module 50 is separately connected to the optical-to-electrical conversion unit 20 and the optical path processing module 30. In a specific implementation, according to a first aspect, the control module 50 may be configured to implement a function that can be implemented by the PON electrical system described above, for example, converting the first optical signal received by the OLT device through the uplink interface 10 into the first electrical signal under the PON network protocol, and outputting the first electrical signal to an electrical port of the foregoing optical-to-electrical conversion unit 20. It should be noted herein that the electrical port of the optical-to-electrical conversion unit 20 is an interface between the optical-to-electrical conversion unit 20 and the control module 50, and may be configured to send an electrical signal to or receive an electrical signal from the control module 50. According to a second aspect, the control module 50 is further configured to generate and send control information to the optical path processing module 30, to control the optical path processing module 30 to enable the foregoing first optical path or the foregoing second optical path. Specifically, when the control module 50 detects that a preset trigger condition (for ease of distinction, a first preset trigger condition is used as a substitute for the description in the following) is met and the second optical path is available, the control module 50 may generate and send second control information to the optical path processing module 30. The second control information is used to control the optical path processing module 30 to enable the second optical path. Optionally, the first preset trigger condition may be specifically that the foregoing first optical path is faulty. Alternatively, the first preset trigger condition may be that the control module 50 receives optical path processing trigger information that is sent by another module or unit and that is used to indicate to enable the second optical path. It may be understood herein that the first preset trigger condition may further include another possible case. This is not specifically limited in this application. Similarly, the control module 50 may be further configured to: when it is detected that a second preset trigger condition is met and the first optical path is available, generate and send third control information to the optical path processing module 30. The third control information is used to control the optical path processing module 30 to enable the first optical path. Optionally, the second preset trigger condition may be specifically that the second optical path is faulty. Alternatively, the second preset trigger condition may be that the control module 50 receives optical path processing trigger information that is sent by another module or unit and that is used to indicate to enable the first optical path. This is not specifically limited in this application. In addition, it should be noted that the control module 50 may be specifically implemented by using a componentized system, or may be implemented by using a system-on-a-chip (system-on-a-chip, SOC) formed by a single integrated chip. This is not specifically limited in this application.

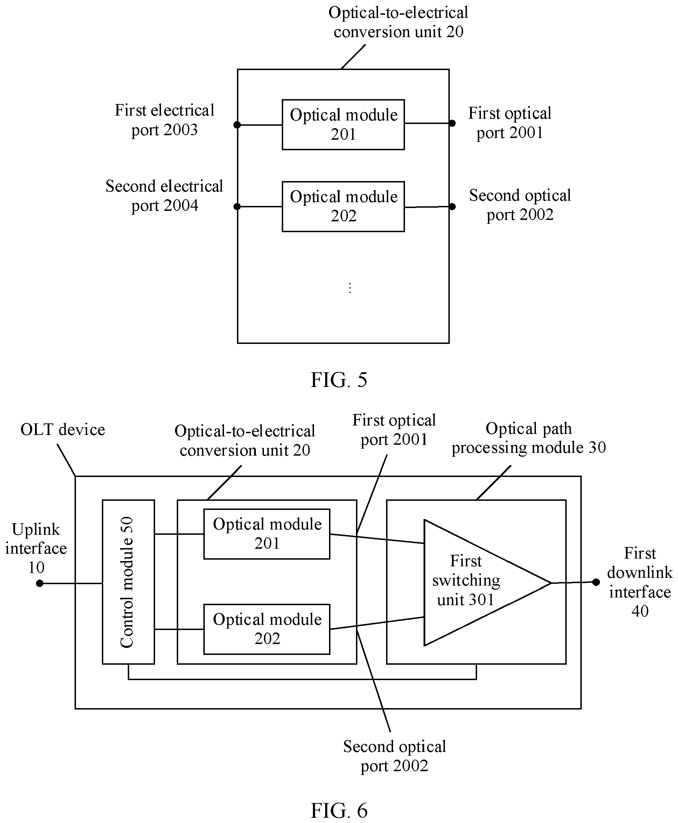

In a first feasible specific implementation, FIG. 5 is a schematic diagram of a structure of an optical-to-electrical conversion unit according to an embodiment of this application. The optical-to-electrical conversion unit 20 may be specifically integrated by at least two mutually independent optical modules, or may be an optical pool system with an optical-to-electrical conversion function. The following uses an implementation scenario in which the optical-to-electrical conversion unit 20 is constituted by at least two independent optical modules as an example to specifically describe the optical-to-electrical conversion unit 20. As shown in FIG. 5, the optical-to-electrical conversion unit 20 may specifically include at least two mutually independent optical modules, such as an optical module 201 and an optical module 202. Herein, for an optical module, an optical port (that is, an input/output port of an optical signal) of the optical module may be directly used as an optical port of the optical-to-electrical conversion unit 20, or may be connected to an optical port of the optical-to-electrical conversion unit 20. An electrical port (that is, an input/output port of an electrical signal) of the optical module may be directly used as an electrical port of the optical-to-electrical conversion unit 20, or may be connected to an electrical port of the optical-to-electrical conversion unit 20. For example, an optical interface of the optical module 201 is a first optical port 2001 of the optical-to-electrical conversion unit 20, and an electrical port of the optical module 201 is a first electrical port 2003 of the optical-to-electrical conversion unit 20. In this way, the optical-to-electrical conversion unit 20 may perform, by using the optical module 201, electrical-to-optical conversion on the electrical signal received by the optical-to-electrical conversion unit 20 from the first electrical port 2003, and output a converted optical signal from the first optical port 2001. Similarly, an optical interface of the optical module 202 is a second optical port 2002 of the optical-to-electrical conversion unit 20, and an electrical port of the optical module 202 is a second electrical port 2004 of the optical-to-electrical conversion unit 20. In this way, the optical-to-electrical conversion unit 20 may also perform, by using the optical module 202, electrical-to-optical conversion on the electrical signal received by the optical-to-electrical conversion unit 20 from the second electrical port 2004, and output a converted optical signal from the second optical port 2002. Herein, the optical-to-electrical conversion unit 20 is integrated based on a plurality of optical modules that are independent of each other, so that integration of the OLT device can be improved, and structural stability of the OLT device can be improved.

In a second feasible specific implementation, FIG. 6 is still another schematic diagram of a structure of an OLT device according to an embodiment of this application. As shown in FIG. 6, the optical path processing module 30 may specifically include a first switching unit 301. From a downlink perspective, the first switching unit 301 has a plurality of input ends and one output end. The first switching unit 301 is mainly configured to selectively and uniquely establish a connection between an input end of the input ends and the output end of the first switching unit 301. It is assumed that the plurality of input ends of the first switching unit 301 include a first port and a second port, and the output end of the first switching unit 301 is a third port. In a specific implementation, the first port of the first switching unit 301 is connected to the foregoing first optical port 2001 through or as a port of the optical path processing module 30, and the second port of the first switching unit is connected to the foregoing second optical port 2002 through or as a port of the optical path processing module 30. The third port of the first switching unit is connected to the foregoing first downlink interface 40 through or as a port of the optical path processing module 30. In a specific optical path processing process, after receiving the second control information from the control module 50, the first switching unit 301 may establish a connection between the first port of the first switching unit 301 and the third port of the first switching unit 301, that is, enable the second optical path. Alternatively, after receiving the third control information from the control module 50, the first switching unit may establish a connection between the second port of the first switching unit and the third port of the first switching unit, that is, enable the first optical path. It should be noted herein that at a same moment, the third port of the first switching unit 301 may be connected to only one of the first port and the second port. For example, when the first switching unit 301 establishes a connection between the third port and the first port of the first switching unit 301, the third port and the second port of the first switching unit 301 are not connected. Similarly, when the first switching unit 301 establishes a connection between the third port and the second port of the first switching unit 301, the third port and the first port are not connected. Herein, the OLT device uses a first switching unit 301 as the optical path processing module 30 to implement enabling of the first optical path or the second optical path, and a structure is simple and stable, so that fast enabling of the first optical path or the second optical path can be implemented, thereby improving troubleshooting efficiency of the first downlink interface 40.

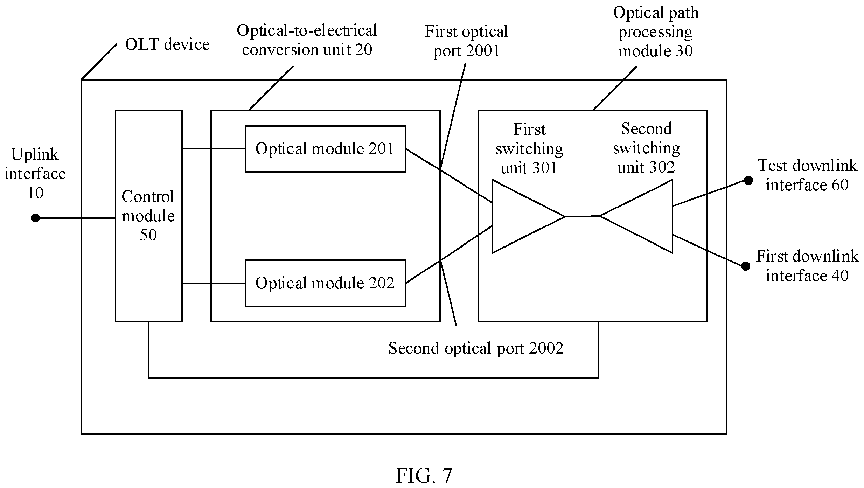

In a third feasible specific implementation, FIG. 7 is still another schematic diagram of a structure of an OLT device according to an embodiment of this application. As shown in FIG. 7, the OLT device further includes a test downlink interface 60, and the test downlink interface 60 may be used by the OLT device to perform fault detection an optical path. Optionally, the test downlink interface 60 may be an independent downlink interface specifically used for optical path detection, or may be obtained by multiplexing another downlink interface (that is, a downlink interface other than the first downlink interface 40) for service data transmission between the OLT device and the PON. This is not specifically limited in this application. The optical path processing module 30 further includes a second switching unit 302, and the second switching unit 302 is included in the first optical path and the second optical path. From a downlink perspective, the second switching unit 302 may include one input end and a plurality of output ends. In a specific implementation, it is assumed that the input end of the second switching unit 302 is a first port of the second switching unit 302, and the plurality of output ends of the second switching unit 302 include a second port and a third port of the second switching unit 302. The first port of the second switching unit 302 is connected to the third port of the first switching unit 301. The second port of the second switching unit 302 is connected to the first downlink interface 40, and the third port of the second switching unit 302 is connected to the foregoing test downlink interface. In an optical path processing process, when determining to perform fault detection on the first optical path or the second optical path, the control module 50 may generate and send first control information to the optical path processing module 30. After receiving the first control information, the second switching unit 302 may establish a connection between the first port of the second switching unit 302 and the second port of the second switching unit 302, to establish a connection between the third port of the first switching unit 301 and the test downlink interface, and therefore, the OLT device can perform fault detection on the first optical path and the second optical path through the test downlink interface. It should be noted herein that, similar to the first switching unit 301, at a same moment, the first port of the second switching unit 302 may be connected to only any one of the second port and the third port.

It may be understood herein that, when the OLT device may further include another downlink interface other than the test downlink interface 60 and the first downlink interface 40, another port included in the second switching unit 302 may also be connected to another downlink interface of the OLT device, to establish a connection between the third port of the first switching unit 301 and the another downlink interface of the OLT device, so that the another downlink interface of the OLT device can be connected to the foregoing first optical port 2001 and the second optical port 2002 by using the first switching unit 301 and the second switching unit 302. In this way, diversity of optical paths between the downlink interface of the OLT device and the optical port of the optical-to-electrical conversion unit and optical path allocation flexibility can be further improved.

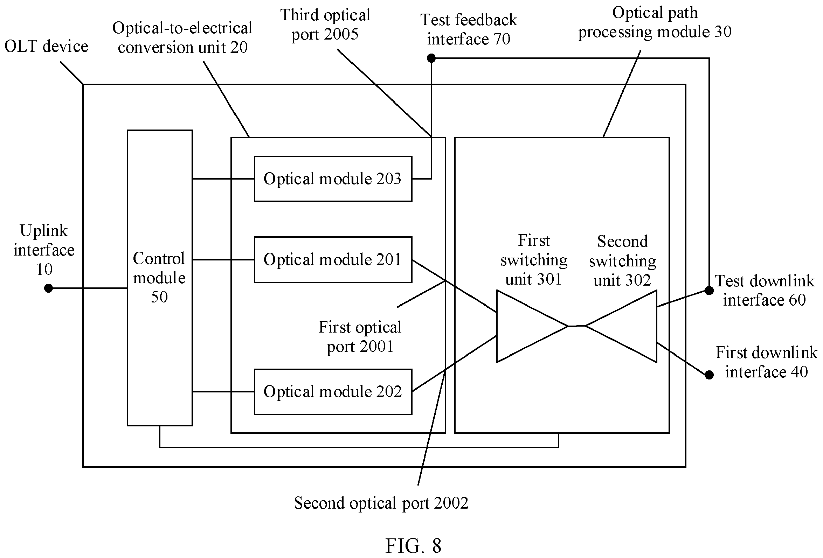

Further, FIG. 8 is still another schematic diagram of a structure of an OLT device according to an embodiment of this application. As shown in FIG. 8, the OLT device further includes a test feedback interface 70. The optical-to-electrical conversion unit 20 further includes an optical module 203 and a third optical port 2005. An optical port of the optical module 203 is connected to the third optical port 2005 or directly used as the third optical port 2005, and an electrical port of the optical module 203 is connected to the control module 50. The third optical port 2005 is connected to one side of the test feedback interface 70, and the other side of the test feedback interface 70 is connected to the test downlink interface 60. Optionally, the test downlink interface 60 and the test feedback interface 70 may further be connected by using an optical attenuator. In this way, it can be avoided that the test feedback interface or the third optical port 2005 is damaged due to excessive power of an optical signal output from the test downlink interface, thereby improving security of the OLT device. In actual application, the optical-to-electrical conversion unit 20 may receive, through the test feedback interface 70, an optical signal output by the test downlink interface 60, and then convert the optical signal into an electrical signal by using the optical module 203, and send the electrical signal to the control module 50. The control module 50 may determine, based on the electrical signal, whether an optical path of the test downlink interface 60 is faulty.

The following uses a fault detection process of the first optical path as an example to describe a detection process of each optical path by the OLT device. In an optional implementation, after determining to perform fault detection on the first optical path, the control module 50 may generate and send first control information to the optical path processing module 30. After receiving the first control information, the first switching unit 301 may establish a connection between the first port of the first switching unit 301 and the third port of the first switching unit 301. In addition, after receiving the first control information, the second switching unit 302 may establish a connection between the first port of the second switching unit 302 and the third port of the second switching unit 302, so that an optical signal passing through the first optical path used by the first downlink interface 40 can reach the test downlink interface 60. Then, the control module 50 may further generate and send a first test electrical signal to the optical module 201 in the optical-to-electrical conversion unit 20. The optical module 201 may convert the first test electrical signal into a first test optical signal, and output the first test optical signal through the first optical port 2001. The first switching unit 301 in the optical path processing module 30 may receive the first test optical signal through the first port of the first switching unit 301, and output the first test optical signal from the third port of the first switching unit 301. The second switching unit 302 may receive the first test optical signal through the first port of the second switching unit 302, and output the first test optical signal to the test downlink interface 60 through the third optical port of the second switching unit 302. Then, the OLT device may receive the first test optical signal from the test downlink interface 60 through the test feedback interface 70, and transmit the first test optical signal to the third optical port 2005 of the optical-to-electrical conversion unit 20. Then, the optical-to-electrical conversion unit 20 may convert the first test optical signal into a second test electrical signal by using the optical module 203, and send the second test electrical signal to the control module 50. Then, the control module 50 may determine, based on the second test electrical signal, whether the first optical path is faulty. In a specific implementation, the control module 50 may extract a signal characteristic parameter of the second test electrical signal, and determine, based on a preset characteristic parameter threshold, whether the first optical path is faulty. Herein, the signal characteristic parameter may include a power value, a voltage value, a current value, and the like of the second test electrical signal. This is not specifically limited in this application. For example, after receiving the second test electrical signal, the control module 50 may first extract a power value P1 of the second electrical signal. Then, if the control module 50 determines that the power value P1 is greater than or equal to a preset power threshold P0, it may be determined that the first optical path is not faulty. If the control module 50 determines that the power value P1 is less than the preset power threshold P0, it may be determined that the first optical path is faulty. Herein, the OLT device may actively perform fault detection on different optical paths (for example, the first optical path or the second optical path) of the first downlink interface 40 by using an optical signal feedback structure formed by the optical path processing module 30, the test downlink interface, and the test feedback interface, to implement fault troubleshooting and fast recovery of the first downlink interface 40, and improve reliability and applicability of the OLT device.

In another implementation, after determining to perform detection on the first optical path, the control module 50 may also obtain working status information fed back by the optical-to-electrical conversion unit 20. The working status information may be obtained by the optical-to-electrical conversion unit 20 by performing functional self-test on each optical module included in the optical-to-electrical conversion unit 20. The working status information indicates whether working status of each optical module in the optical-to-electrical conversion unit 20 is normal. After acquiring the working status information, the control module 50 may determine, based on the working status information, whether working status of the optical module 201 included in the first optical path is normal. If the control module 50 determines that the working status of the optical module 201 is normal, it may be determined that the first optical path is not faulty. If the control module 50 determines that the working status of the optical module 201 is abnormal, it may be determined that the first optical path is faulty. In still another implementation, after performing detection on the first optical path, the control module 50 may further obtain an optical path status report fed back by user equipment served by the first downlink interface 40 by using the first optical path. The optical path status report indicates whether working status of the first optical path is normal. Then, the control module 50 may determine, based on the optical path status report, whether the first optical path is faulty. It may be understood herein that the foregoing detection process for detecting whether the first optical path is faulty is merely an example, and the OLT device may further perform fault detection on the first optical path in another manner. This is not specifically limited in this application.

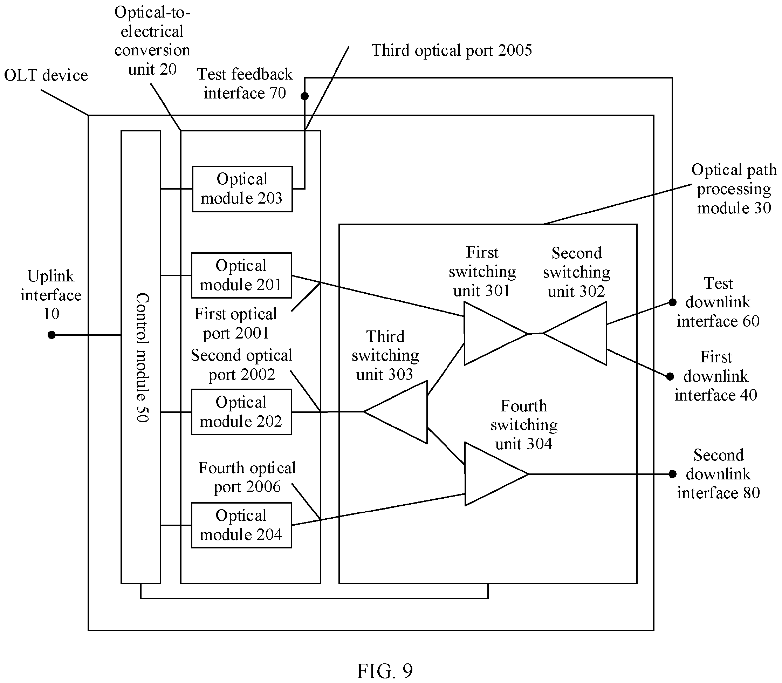

In a fourth feasible specific implementation, FIG. 9 is another schematic diagram of a structure of an OLT device according to an embodiment of this application. As shown in FIG. 9, the OLT device further includes a second downlink interface 80, and the optical-to-electrical conversion unit 20 further includes an optical module 204 and a fourth optical port 2006. An optical port of the optical module 204 is connected to the fourth optical port 2006 or directly used as the fourth optical port 2006, and an electrical port of the optical module 204 is connected to the control module 50. The optical path processing module 30 further includes a third switching unit 303 and a fourth switching unit 304. From a downlink perspective, the third switching unit 303 is similar to the second switching unit 302, and has one input end and a plurality of output ends. The fourth switching unit 304 is similar to the first switching unit 301, and has a plurality of input ends and one output end. In actual application, it is assumed that the input end of the third switching unit 303 is a first port of the third switching unit 303, and the plurality of output ends of the third switching unit 303 include a second port and a third port. The input end of the third switching unit 303 is the first port of the third switching unit 303, and the plurality of output ends of the third switching unit 303 include the second port and the third port of the third switching unit 303. The input ends of the fourth switching unit 304 include a first port and a second port of the fourth switching unit 304, and the output end of the fourth switching unit 304 is a third port of the fourth switching unit 304. The first port of the third switching unit 303 is connected to the second optical port 2002, the second port of the third switching unit is connected to the second port of the first switching unit 301, and the third port of the third switching unit 303 is connected to the first port of the fourth switching unit 304. The second port of the fourth switching unit 304 is connected to the fourth optical port 2006, and the third port of the fourth switching unit 304 is connected to the second downlink interface 80. The third switching unit 304 may be configured to establish a connection between the first port of the third switching unit 304 and the second port of the third switching unit 304 or the third port of the third switching unit 304, so that a connection between the second optical port 2002 and the first switching unit 301 or the fourth switching unit 304 may be established by using the third switching unit 304. The fourth switching unit 304 may be configured to establish a connection between the second port of the fourth switching unit 304 or the first port of the fourth switching unit 304 and the third port of the fourth switching unit 304, so that a connection between the second optical port 2002 or the third optical port 2005 and the second downlink interface 80 may be established. It should be noted herein that the third switching unit 303 and the fourth switching unit 304 are the same as the first switching unit 301 or the second switching unit 302, and only one input end and one output end are connected at a same moment.

Based on the foregoing connection relationship, the OLT device may establish at least two optical paths for the second downlink interface 80 by using the third switching unit 303 and the fourth switching unit 304 in the optical path processing module 30, including a fourth optical path constructed by the second downlink interface 80, the third switching unit 303, the fourth switching unit 304, and the second optical port 2002, and a third optical path constructed by the second downlink interface 80, the fourth switching unit 304, and the fourth optical port 2006. Similar to operating principles of the first optical path and the second optical path, the control module 50 may also enable the third optical path or the fourth optical path based on different requirements. For example, when determining that the third optical path is faulty (for example, an optical module 209 is faulty) and the fourth optical path is not used, the control module 50 may generate and send fourth control information to the optical path processing module. After receiving the fourth control information, the third switching unit 303 in the optical path processing module 30 may establish a connection between the first port of the third switching unit 303 and the third port of the third switching unit 303, to establish a connection between the second optical port 2002 and the first port of the fourth switching unit 304. After receiving the fourth control information, the fourth switching unit may establish a connection between the first port of the fourth switching unit and the third port of the fourth switching unit, to establish a connection between the second optical port 2002 and the second downlink interface 80 to implement enabling of the third optical path.

It should be noted in particular that, when determining that the first optical path and the third optical path are both faulty, in an implementation, the control module 50 may first determine, based on a preset downlink interface service rule, to enable the second optical path or the fourth optical path. Herein, the downlink interface service rule may include a service priority corresponding to each downlink interface of the OLT device. When the control module 50 determines, based on the service priority corresponding to each downlink interface, that a service priority of the foregoing first downlink interface 40 is higher than that of the second downlink interface 80, the control module 50 may determine to enable the second optical path. When the control module 50 determines, based on the service priority corresponding to each downlink interface, that the service priority of the foregoing first downlink interface 40 is lower than that of the second downlink interface 80, the control module 50 may determine to enable the fourth optical path. In another implementation, the control module 50 may also determine, based on a quantity of users of each downlink interface, to enable the second optical path or the fourth optical path. That is, the control module 50 may first obtain a user quantity of the first downlink interface 40 (for ease of distinction, a first user quantity is used as a substitute for the description in the following) and a user quantity of the second downlink interface 80 (for ease of distinction, a second user quantity is used as a substitute for the description in the following). Then, when determining that the first user quantity is greater than or equal to the second user quantity, the control module 50 may determine to enable the second optical path. When determining that the first user quantity is less than the second user quantity, the control module 50 may determine to enable the fourth optical path. Certainly, the control module 50 may further determine, based on another parameter, for example, optical signal strength of each optical port or a service volume of each downlink interface, to enable the second optical path or the fourth optical path. This is not specifically limited in this application.

Herein, for a second optical port 2002, a second optical path or a fourth optical path is separately established between the second optical port 2002 and the first downlink interface 40 and between the second optical port 2002 and the second downlink interface 80 by using the optical path processing module 30, so that both the first downlink interface 40 and the second downlink interface can receive an optical signal from the second optical port 2002, thereby further improving diversity of optical paths between the downlink interface of the OLT device and the optical port of the optical-to-electrical conversion unit 20. This may improve optical path allocation flexibility of the OLT device.

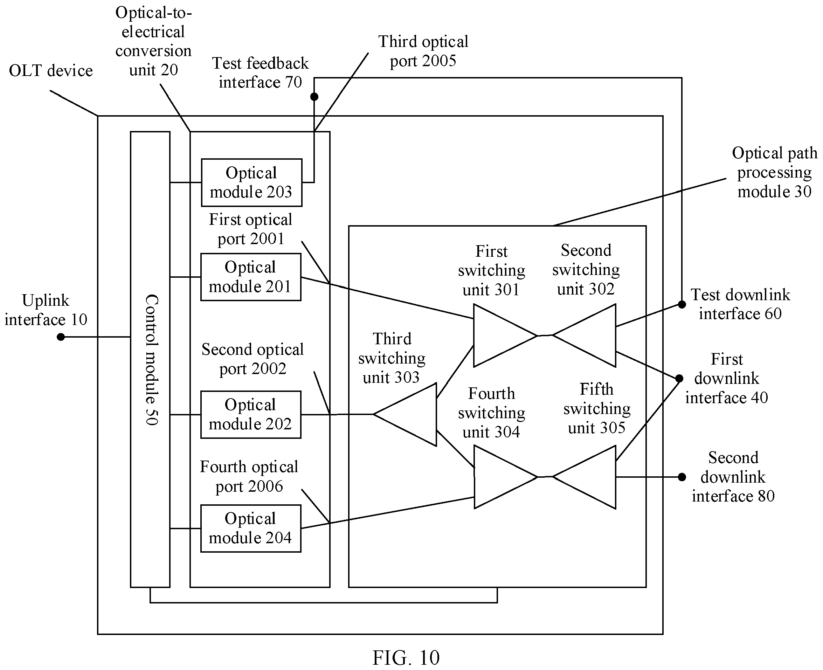

In a fifth optional specific implementation, FIG. 10 is another schematic diagram of a structure of an OLT device according to an embodiment of this application. As shown in FIG. 10, the optical path processing module 30 further includes a fifth switching unit 305. Similar to the second switching unit 302 or the third switching unit 303, the fifth switching unit has one input end and a plurality of output ends. In a specific implementation, it is assumed that the input end of the fifth switching unit 305 is a first port of the fifth switching unit 305, and the output ends of the fifth switching unit 305 include a second port and a third port. The first port of the fifth switching unit 305 is connected to the third port of the fourth switching unit 304, the second port of the fifth switching unit 305 is connected to the second downlink interface 80, and the third port of the fifth switching unit 305 is connected to the first downlink interface 40. The fifth switching unit 305 may be configured to establish a connection between the first port of the fifth switching unit 305 and the second port or the third port of the fifth switching unit 305, to implement a connection between the third port of the fourth switching unit and the first downlink interface 40 or the second downlink interface 80. With reference to the third switching unit 303 and the fourth switching unit 304, the optical path processing module 30 may establish a fifth optical path between the first downlink interface 40 and the second optical port 2002. The fifth optical path includes the second optical port 2002, the third switching unit 303, the fourth switching unit 304, the fifth switching unit 305, and the first downlink interface 40. Alternatively, the optical path processing module 30 may establish a sixth optical path between the first downlink interface 40 and the fourth optical port 2006, where the sixth optical path includes the fourth optical port 2006, the fourth switching unit 304, the fifth switching unit 305, and the first downlink interface 40. In this way, when the first downlink interface 40 is faulty, the control module 50 may further control the optical path processing module 30 to enable the fifth optical path or the sixth optical path to implement fault recovery of the first downlink interface 40. For a specific control process, refer to a process in which the control module 50 controls the optical path processing module 30 to enable the first optical path or the second optical path. Details are not described herein again. Herein, the OLT device further enriches an available optical path between the first downlink interface 40 and the optical port of the optical-to-electrical conversion unit based on the fifth switching unit 305, thereby further improving optical path allocation flexibility of the OLT device.

Optionally, similar to a principle of the fifth switching unit 305, the second switching unit 302 may further include a fourth port, and the fourth port is connected to the second downlink interface 80. The optical path processing module 30 may establish a seventh optical path between the first optical port 2001 and the second downlink interface 80, or establish an eighth optical path between the second optical port 2002 and the second downlink interface 80, thereby further enriching an available optical path between the second downlink interface and the optical port of the optical-to-electrical conversion unit.

It should be added that, in a fifth specific implementation, there are a plurality of optical paths, such as the first optical path, the second optical path, the fifth optical path, and the sixth optical path, between the first downlink interface 40 and the foregoing optical-to-electrical conversion unit 20. There are a plurality of optical paths, such as the third optical path, the fourth optical path, the seventh optical path, and the eighth optical path, between the second downlink interface 80 and the optical-to-electrical conversion unit 20. Therefore, in some scenarios, the control module 50 needs to determine, based on a requirement, an optical path used for the first downlink interface 40 or the second downlink interface. The following uses an example in which the control module 50 determines an optical path for the first downlink interface 40 for description. If the first optical path currently used by the first downlink interface 40 is faulty, the control module 50 needs to determine, from the foregoing second optical path, the fifth optical path, and the sixth optical path, a first target optical path used to perform optical signal transmission instead of the first optical path. Specifically, the control module 50 may determine, based on working status of an optical port and a switching unit included in each of the second optical path, the fifth optical path, and the sixth optical path, an optical path in an idle state from the second optical path, the fifth optical path, and the sixth optical path. Herein, an optical path in an idle state refers to an optical port and a switching unit included in the optical path are unused. If it is determined that there is only one optical path in the idle state, the optical path may be directly determined as the first target optical path. If it is determined that there are a plurality of optical paths in the idle state, one of the plurality of optical paths in the idle state may be randomly selected and determined as the first target optical path. It may be understood that the control module 50 may further determine the first target optical path from the second optical path, the fifth optical path, and the sixth optical path based on another rule, for example, a preset use priority of each optical path. This is not specifically limited in this application.

Optionally, the fifth switching unit 305 may further include a fourth port, and the fourth port of the fifth switching unit 305 is connected to the test downlink interface 60. In this way, the OLT device can route, by using the fifth switching unit 305, an optical signal that passes through the seventh optical path or the eighth optical path to the test downlink interface, to complete fault detection on the seventh optical path or the eighth optical path.

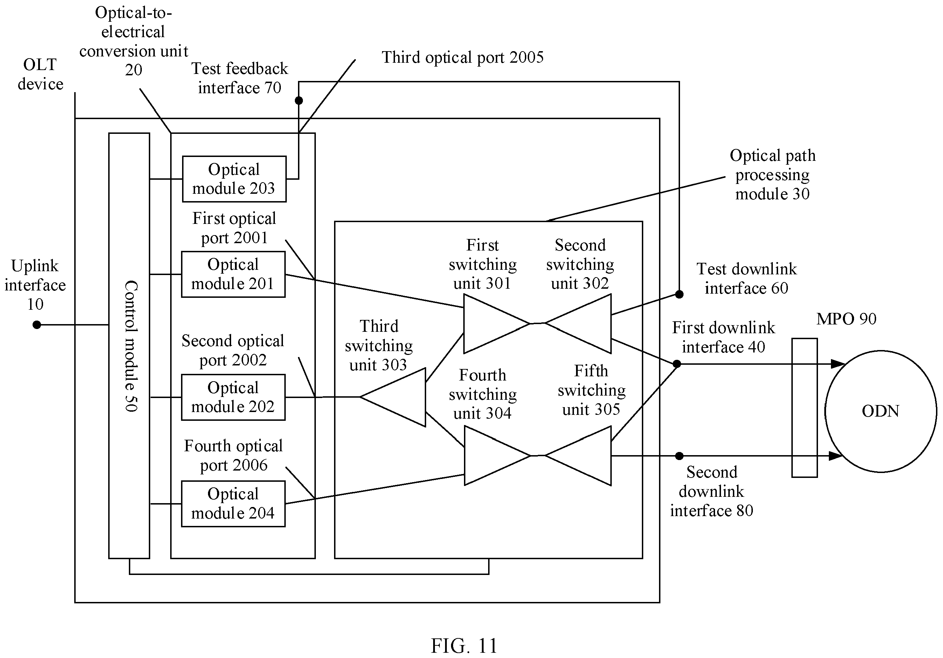

Further, FIG. 11 is a schematic diagram of an application of an OLT device according to this application. As shown in FIG. 11, the first downlink interface 40 and the second downlink interface 80 of the OLT device may access the ODN through a multiple-fiber push-on/pull off (multiple-fiber push-on/pull off, MPO) optical interface 90. Certainly, a downlink interface other than the first downlink interface 40 or the second downlink interface 80 on the OLT device may also access the ODN through the MPO optical interface 90. This is not specifically limited in this application. Herein, the downlink interface accesses the ODN through the MPO optical interface, to avoid processes such as fiber splicing in an ODN access process, thereby improving installation and maintenance efficiency of the OLT device and reducing installation and maintenance costs.

Further, with reference to FIG. 10 at the same time, the following uses a process in which the OLT device performs optical path allocation on the first downlink interface 40 as an example to describe an optical path allocation process of the OLT device. It is assumed that the first downlink interface 40 is not connected to any user equipment currently. When the control module 50 in the OLT device obtains a service request of user equipment for the first downlink interface 40, the control module 50 may first determine, based on a preset optical port screening rule, an optical port that can be used by the first downlink interface 40 from the first optical port 2001, the second optical port 2002, and the fourth optical port 2006. Optionally, the optical port screening rule may include an unoccupied optical port, an optical port with a low structural complexity of an optical path between the optical port and the first downlink interface 40, and the like. This is not specifically limited herein. It is assumed that determined optical ports that can be used by the first downlink interface 40 include the first optical port 2001 and the fourth optical port 2006. Then, the control module 50 may select, based on a port connection status of each switching unit in the optical path processing module 30, at least one optical path in an idle state from a plurality of preset optical paths between the first downlink interface 40 and the first optical port 2001, and between the first downlink interface 40 and the fourth optical port 2006. Then, the control module 50 determines, based on structural complexity of each optical path in an idle state, a second target optical path as an optical path currently used by the first downlink interface 40. Herein, the control module 50 preferably uses an optical path in an idle state with a low structural complexity as the second target optical path. It is assumed that the second target optical path is the first optical path. After determining the first optical path, the control module 50 may generate and send control information for enabling the first optical path to the optical path processing module 30. After receiving the control information, the optical path processing module 30 may implement enabling of the first optical path by using each switching unit inside the optical path processing module 30. It may be understood that, after the optical path allocation of the first downlink interface 40 is completed, the first optical path may also be considered as a main optical path of the first downlink interface 40. In a case in which the first optical path is not faulty, the first downlink interface 40 preferentially uses the first optical path to perform optical signal transmission. Another available optical path other than the first optical path may be understood as a standby optical path of the first downlink interface 40. A function of the standby optical path is to provide optical signal transmission for the first downlink interface 40 instead of the first optical path in a case in which the first optical path is faulty or the first optical path is used for another purpose. For example, if the control module 50 determines that the first optical path is the active optical path of the first downlink interface 40, the second optical path, the fifth optical path, or the sixth optical path may be considered as the standby optical path of the first downlink interface 40. When the first optical path is faulty, the control module 50 may select a first target optical path from the second optical path, the fifth optical path, or the sixth optical path to replace the first optical path. For a specific selection process, refer to the foregoing description. Details are not described herein again.

Optionally, the switching unit (that is, the first switching unit to the fifth switching unit) involved in the foregoing optional specific implementation may be an optical switch. The optical switch may be specifically implemented in a form of a micro-electro-mechanical system (micro-electro-mechanical system, MRMS), a programmable logic controller (programmable logic control, PLC), or the like. When an optical switch is used as a switching unit to implement the foregoing optical path processing module 30, the structure is simple and costs are low, so that design and production costs of the OLT device may be reduced.

It should be noted that, in the foregoing implementations, a case in which the OLT device constructs, by using the optical path processing module 30, a plurality of optical paths between the first downlink interface 40 or the second downlink interface and the first optical port 2001, the second optical port 2002, or the fourth optical port 2006 of the optical-to-electrical conversion unit 20 inside the OLT device is only described as an example. However, in actual application, the OLT device may further include another downlink interface except the first downlink interface 40 and the second downlink interface. The optical-to-electrical conversion unit 20 inside the OLT device may also include another optical port except the first optical port 2001, the second optical port 2002, the third optical port 2005, or the fourth optical port 2006. The optical path processing module 30 may further include more switching units that are connected in the foregoing connection manner shown in the first optional specific implementation to the fifth optional specific implementation. Therefore, the OLT device may further enable different optical paths between the foregoing other downlink interfaces and the foregoing other optical ports based on the optical path processing module 30 having more switching units. For a specific structure of the OLT device and a process of enabling different optical paths, refer to the foregoing description. Details are not described herein again.

The OLT device provided in this application establishes at least two optical paths between a downlink interface of the OLT device and the optical-to-electrical conversion unit 20 by using the optical path processing module 30. For example, at least two optical paths that can be enabled at any time, including the first optical path and the second optical path, are established between the first downlink interface 40 and the optical-to-electrical conversion unit 20. In this way, in a case in which an optical path currently used by a downlink interface is faulty, the OLT device may enable another optical path to replace the faulty optical path, so that a fault of the downlink interface can be quickly recovered. In this way, it is ensured that transmission of an optical signal between the downlink interface and the optical-to-electrical conversion unit is not interrupted, a service of the user equipment is prevented from being affected by the fault of the downlink interface, and reliability and applicability of the OLT device are improved.

### Embodiment 2

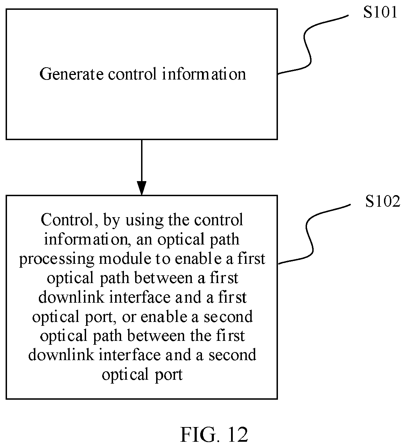

FIG. 12 is a schematic flowchart of an optical path processing method according to an embodiment of this application. The optical path processing method is applicable to an OLT device described in this embodiment, and is specifically executed by a control apparatus 50 included in the OLT device. A specific structure of the OLT device is described in Embodiment 1, and details are not described in this embodiment. As shown in FIG. 11, the method includes the following steps:

S101: A control apparatus 50 generates control information.

In some feasible implementations, when detecting that a preset trigger condition is met, the control module 50 may generate control information, where the control information is used to control an optical path processing module 30 to enable a first optical path between a first downlink interface and a first optical port, or to enable a second optical path between the first downlink interface and a second optical port.

In a specific implementation, the foregoing preset trigger condition may include a first preset trigger condition and a second preset trigger condition. When the control module 50 detects that the first preset trigger condition is met, second control information may be generated. Alternatively, when the control module 50 detects that the second preset trigger condition is met, third control information may be generated. Herein, for a process in which the control module 50 determines and generates the second control information or the third control information based on the first preset trigger condition or the second preset trigger condition, refer to the description in Embodiment 1. Details are not described herein again.

Further, before the control module 50 generates the control information, fault detection may be first performed on the first optical path or the second optical path. The following describes a process in which the control module 50 performs fault detection on the first optical path as an example. In a first optional implementation, after determining to perform fault detection on the optical path, the control module 50 may generate and send first control information to the optical path processing module 30, to control, by using the first control information, the optical path processing module 30 to establish a connection between a first optical port 2001 of an optical-to-electrical conversion unit and a test downlink interface 60, so that an optical signal passing through the first optical path can be output from the test downlink interface 60. Then, the control module 50 may generate a first test electrical signal, control the first test electrical signal to pass through the first optical path, the test downlink interface 60, a test feedback interface 80, and an optical-to-electrical conversion unit 20, and finally convert into a second test electrical signal that is received by the control module 50. Then, the control module 50 may determine, based on a signal characteristic parameter of the second test electrical signal, whether the first optical path is faulty. In a second optional implementation, whether the first optical path is faulty is determined by the control module 50 based on working status information fed back by the optical-to-electrical conversion unit 20, or by user equipment served by a first downlink interface 40 based on an optical path status report fed back by the first optical path. For a specific process involved in the foregoing first optional implementation and the second optional implementation, refer to a process of fault detection on the first optical path described in Embodiment 1. Details are not described herein again.

Further, the control module 50 may further perform optical path allocation on each downlink interface of the OLT device. For a specific process, reference may be made to a process of performing optical path allocation for the first downlink interface 40 described in Embodiment 1. Details are not described herein again.

S102: The control apparatus 50 controls, by using the control information, an optical path processing module 30 to enable a first optical path between a first downlink interface and a first optical port, or enable a second optical path between the first downlink interface and a second optical port.

In some feasible implementations, after generating the control information, the control module 50 may send the control information to the optical path processing module 30. After receiving the control information, the optical path processing module 30 may enable the first optical path or the second optical path. Herein, for a specific process in which the control module 50 controls the optical path processing module 30 to enable the first optical path or the foregoing second optical path by using the control information, refer to enabling the foregoing first optical path or the foregoing second optical path described in Embodiment 1. Details are not described herein again. In addition, under structures of the different optical path processing module 30 described in FIG. 6 to FIG. 10 involved in Embodiment 1, the control module 50 can further control the optical path processing module 30 to enable an optical path between a second downlink interface 80 of the OLT device and the foregoing second optical port 2002 or the foregoing fourth optical port 2006 of the optical-to-electrical conversion unit 20. For specific content, refer to content described in Embodiment 1. Details are not described herein again.

In this embodiment, the control module may control the optical path processing module to enable at least two optical paths between the downlink interface and the optical-to-electrical conversion unit. In this way, in a case in which an optical path currently used by the downlink interface is faulty, a control apparatus may enable another optical path to replace the faulty optical path, so that a fault of the downlink interface can be quickly recovered, thereby ensuring that transmission of an optical signal between the downlink interface and the optical-to-electrical conversion unit is not interrupted, avoiding that a service of user equipment served by the downlink interface is not affected by the fault of the downlink interface, and improving reliability and applicability of the OLT device.

## Claims

1. An optical line terminal OLT device, wherein the OLT device comprises a first downlink interface, an optical-to-electrical conversion unit, and an optical path processing module, wherein
the optical-to-electrical conversion unit comprises a first optical port and a second optical port, the first downlink interface is separately connected to the first optical port and the second optical port by using the optical path processing module, and the optical path processing module is configured to enable a first optical path between the first downlink interface and the first optical port or enable a second optical path between the first downlink interface and the second optical port.

2. The OLT device according to claim 1, wherein the optical path processing module comprises a first switching unit, wherein
the first switching unit is comprised in the first optical path and the second optical path, a first port of the first switching unit is connected to the first optical port, a second port of the first switching unit is connected to the second optical port, and a third port of the first switching unit is connected to the first downlink interface; and
the first switching unit is configured to establish a connection between the first optical port and the third port of the first switching unit, or establish a connection between the second optical port and the third port of the first switching unit.

3. The OLT device according to claim 2, wherein the OLT device further comprises a test downlink interface, and the optical path processing module comprises a second switching unit, wherein
the second switching unit is comprised in the first optical path and the second optical path, a first port of the second switching unit is connected to the third port of the first switching unit, a second port of the second switching unit is connected to the first downlink interface, and a third port of the second switching unit is connected to a side of the test downlink interface; and
the second switching unit is configured to establish a connection between the third port of the first switching unit and the first downlink interface or the test downlink interface.

4. The OLT device according to claim 3, wherein the OLT device further comprises a control module and a test feedback interface, and the optical-to-electrical conversion unit further comprises a third optical port, wherein
the control module is separately connected to the optical-to-electrical conversion unit and the optical path processing module, the other side of the test downlink interface is connected to one side of the test feedback interface, and the other side of the test feedback interface is connected to the third optical port; and
when the control module determines to perform fault detection on the first optical path, the control module is configured to generate and send first control information to the optical path processing module, the second switching unit is configured to establish a connection between the third port of the first switching unit and one side of the test downlink interface based on the first control information, the control module is further configured to generate and send a first test electrical signal to the optical-to-electrical conversion unit, the optical-to-electrical conversion unit is configured to convert the first test electrical signal into a first test optical signal and send the first test optical signal to the second switching unit through the first optical port, the second switching unit is further configured to send the first test optical signal to the test feedback interface through the test downlink interface, the optical-to-electrical conversion unit is further configured to receive the test electrical signal from the test feedback interface through the third optical port, and convert the first test electrical signal into a second test optical signal and send the second test optical signal to the control module, and the control module is configured to determine, based on the second test electrical signal, whether the first optical path is faulty.

5. The OLT device according to any one of claims 2 to 4, wherein the OLT device further comprises a second downlink interface, the optical-to-electrical conversion unit further comprises a fourth optical port, and the optical path processing module further comprises a third switching unit and a fourth switching unit, wherein
the third switching unit is comprised in the second optical path and a third optical path between the fourth optical port and the second downlink interface, the fourth switching unit is comprised in the third optical path, a first port of the third switching unit is connected to the second optical port, a second port of the third switching unit is connected to the second port of the first switching unit, a third port of the third switching unit is connected to a first port of the fourth switching unit, a second port of the fourth switching unit is connected to the fourth optical port, and a third port of the fourth switching unit is connected to the second downlink interface; and
the third switching unit is configured to establish a connection between the second port of the second switching unit or the first port of the fourth switching unit and the second optical port, and the fourth switching unit is configured to establish a connection between the first port of the third switching unit or the fourth optical port and the third port of the fourth switching unit.

6. The OLT device according to claim 5, wherein the optical path processing module further comprises a fifth switching unit, wherein
the fifth switching unit is comprised in the third optical path, a first port of the fifth switching unit is connected to the third port of the fourth switching unit, a second port of the fifth switching unit is connected to the first downlink interface, and a third port of the fifth switching unit is connected to the second downlink interface; and
the fifth switching unit is configured to establish a connection between the third port of the fourth switching unit and the first downlink interface or the second downlink interface.

7. The OLT device according to any one of claims 4 to 6, wherein the control module is configured to: when it is determined that a preset trigger condition is met, generate and send second control information to the optical path processing module, wherein the optical path processing module is configured to enable the second optical path based on the second control information, wherein the preset trigger condition comprises that the first optical path is faulty, or preset optical path processing trigger information is received.

8. The OLT device according to any one of claims 5 to 7, wherein the first downlink interface and/or the second downlink interface access a PON through a multiple-fiber push-on/pull off MPO optical interface.

9. The OLT device according to any one of claims 1 to 8, wherein the optical-to-electrical conversion unit comprises at least one optical module, and any one of the at least one optical module corresponds to at least one optical port of the optical-to-electrical conversion unit.

10. The OLT device according to any one of claims 4 to 9, wherein the control module is configured to: when a service request for the first downlink interface is received, determine the first optical port from the plurality of optical ports of the optical-to-electrical conversion unit based on a preset optical port screening rule, and control the optical path processing module to enable the first optical path.

11. The OLT device according to any one of claims 5 to 10, wherein the control module is further configured to receive unit status information sent by the optical-to-electrical conversion unit, and determine, based on the unit status information, whether the first optical path is faulty; or
the control module is further configured to receive an optical path status report sent by user equipment connected to the first downlink interface, and determine, based on the optical path status report, whether the first optical path is faulty.

12. The OLT device according to any one of claims 5 to 11, wherein when the first optical port meets a preset service rule, the third switching unit is configured to establish a connection between the second port of the first switching unit and the second optical port; or when the third optical port meets the preset service rule, the third switching unit is configured to establish a connection between the first port of the fourth switching unit and the second optical port.

13. An optical path processing method, wherein the method is applicable to an OLT device, the OLT device comprises a first downlink interface, an optical-to-electrical conversion unit, and an optical path processing module, the optical-to-electrical conversion unit comprises a first optical port and a second optical port, and the first downlink interface is separately connected to the first optical port and the second optical port by using the optical path processing module; and the method comprises:
generating and sending control information to the optical path processing module; and
controlling, by using the control information, the optical path processing module to enable a first optical path between the first downlink interface and the first optical port, or enable a second optical path between the first downlink interface and the second optical port.

14. The method according to claim 13, wherein the control information comprises second control information and third control information, and the optical path processing module comprises a first switching unit, wherein
the first switching unit is comprised in the first optical path and the second optical path, a first port of the first switching unit is connected to the first optical port, a second port of the first switching unit is connected to the second optical port, and a third port of the first switching unit is connected to the first downlink interface; and
the controlling, by using the control information, the optical path processing module to enable a first optical path between the first downlink interface and the first optical port, or enable a second optical path between the first downlink interface and the second optical port comprises:
controlling, by using the second control information, the optical path processing module to establish a connection between the second optical port and the third port of the first switching unit; or
controlling, by using the third control information, the optical path processing module to establish a connection between the first optical port and the third port of the first switching unit.

15. The method according to claim 14, wherein the OLT device further comprises a test downlink interface, and the optical path processing module comprises a second switching unit, wherein
the second switching unit is comprised in the first optical path and the second optical path, a first port of the second switching unit is connected to the third port of the first switching unit, a second port of the second switching unit is connected to the first downlink interface, and a third port of the second switching unit is connected to a side of the test downlink interface; and
the method further comprises:
sending first control information to the optical path processing module; and
controlling, by using the first control information, the optical path processing module to establish a connection between the third port of the first switching unit and the side of the test downlink interface.

16. The method according to claim 15, wherein the OLT device further comprises a control module and a test feedback interface, and the optical-to-electrical conversion unit 20 further comprises a third optical port, wherein
the control module is separately connected to the optical-to-electrical conversion unit and the optical path processing module, the other side of the test downlink interface is connected to one side of the test feedback interface, and the other side of the test feedback interface is connected to the third optical port; and
the method further comprises:
sending a first test electrical signal to the optical-to-electrical conversion unit;
converting the first test electrical signal into a first test optical signal by using the optical-to-electrical conversion unit, and transmitting the first test optical signal to the optical path processing module;
sending, by using the optical path processing module, the first test optical signal to the test feedback interface through the test downlink interface;
converting the first test optical signal received from the test feedback interface into a second test electrical signal by using the optical-to-electrical conversion unit; and
determining, based on the second test electrical signal, whether the first optical path is faulty.

17. The method according to any one of claims 14 to 16, wherein the OLT device further comprises a second downlink interface, the optical-to-electrical conversion unit further comprises a fourth optical port, and the optical path processing module further comprises a third switching unit and a fourth switching unit, wherein
the third switching unit is comprised in the second optical path and a third optical path between the fourth optical port and the second downlink interface, the fourth switching unit is comprised in the third optical path, a first port of the third switching unit is connected to the second optical port, a second port of the third switching unit is connected to the second port of the first switching unit, a third port of the third switching unit is connected to a first port of the fourth switching unit, a second port of the fourth switching unit is connected to the fourth optical port, and a third port of the fourth switching unit is connected to the second downlink interface; and
the method further comprises:
sending fourth control information to the optical path processing module; and
controlling, by using the fourth control information, the optical path processing module to establish a connection between the first port of the fourth switching unit and the second optical port, and establish a connection between the first port of the third switching unit and the third port of the fourth switching unit.

18. The method according to claim 17, wherein the first downlink interface and/or the second downlink interface access a PON through a multiple-fiber push-on/pull off MPO optical interface.
